# EUROPEAN PATENT SPECIFICATION

(11) **EP 3 034 868 B1**
(45) Date of publication and mention of the grant of the patent: **30.12.2020**
(21) Application number: 15197027.4
(22) Date of filing: 30.11.2015
(51) Int. Cl.: F03D 7/02, F03D 7/04

(54) **SYSTEMS AND METHODS FOR INCREASING WIND TURBINE POWER OUTPUT**
SYSTEME UND VERFAHREN ZUR ERHÖHUNG DER LEISTUNGSAUSGABE EINER WINDTURBINE
SYSTÈMES ET PROCÉDÉS POUR AUGMENTER LA PUISSANCE DE SORTIE DE TURBINE ÉOLIENNE

(30) Priority: 18.12.2014 US 201414574495
(43) Date of publication of application: 22.06.2016
(73) Proprietor: General Electric Company, Schenectady, NY 12345 (US)
(72) Inventor: EDENFELD, Thomas, 48499 DE Salzbergen (DE)
(74) Representative: Zimmermann & Partner Patentanwälte mbB

(56) References cited:
- US-A1- 2008 150 285
- US-A1- 2009 021 014
- US-A1- 2011 140 433
- US-A1- 2012 010 755

## Description

The present disclosure relates generally to wind turbines, and more particularly to system and methods for increasing the power output of a doubly fed induction generator wind turbine system at reduced wind speeds.

Wind power has received increased attention as being one of the cleanest, most environmentally friendly energy sources presently available. A typical modern wind turbine can include a tower, a generator, a gearbox, a nacelle, and a rotor having one or more rotor blades. The rotor blades can transform wind energy into a mechanical rotational torque that drives one or more generators via the rotor. The one or more generators can be, for instance, coupled to the rotor via a gearbox. The gearbox can step up the inherently low rotational speed of the rotor such that the generator can efficiently convert the mechanical rotational energy to electrical energy, which can be fed into a utility grid via at least one electrical connection.

Wind turbines can use a variable speed operation such that the speed of a turbine blade changes with changes in wind speed. However, as the speed of the turbine fluctuates, the frequency of alternating current flowing from the generator also fluctuates. Accordingly, variable speed turbine configurations can also include power converters that can be used to convert a frequency of generated electrical power to a frequency substantially similar to a utility grid frequency. Such power converters can typically comprise an AC-DC-AC topology with a regulated DC link, and can be controlled by a converter controller. See, for example, US 2008/0150285 and US 2009/0021014.

Such wind turbines can use variable speed operations to optimize loads and to improve turbine output. In particular, wind turbines are most efficient when they operate at an optimum tip-speed ratio. Tip-speed ratio is the ratio between the tangential speed of the tip of a turbine blade and the velocity of the wind at the wind turbine. Accordingly, a wind turbine will collect more wind energy operating at the optimum tip-speed ratio than it will if operating outside the optimum tip-speed ratio. For many wind turbines, the operating space, and hence value to the customer, is limited by maximum voltages for one or more wind turbine components inherent to wind turbine systems. For instance, a power converter in a wind turbine system can have a voltage constraint that limits the minimum and maximum speed values of the generator.

Thus, a need exists for systems and methods for increasing the power output of a wind turbine system at reduced wind speeds while also maintaining power converter voltage levels within specified operating limits.

Various aspects and advantages of the invention will be set forth in part in the following description, or may be clear from the description, or may be learned through practice of the invention.

The present invention is defined by the appended claims.

In the drawings:
FIG. 1 depicts an example doubly fed induction generator (DFIG) wind turbine system according to example embodiments of the present disclosure;
FIG. 2 depicts an example controller according to example embodiments of the present disclosure;
FIG. 3 depicts a flow diagram of an example method for increasing the power output of a DFIG wind turbine system according to example embodiments of the present disclosure;
FIG. 4 depicts an example wind farm according to example embodiments of the present disclosure;
FIG. 5 depicts a flow diagram of an example method for increasing the power output of a wind farm according to example embodiments of the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

Example aspects of the present disclosure are directed to systems and methods for increasing power output in a doubly fed induction generator (DFIG) wind turbine system at reduced wind speeds. The DFIG system can include a wind driven doubly fed induction generator having a rotor and a stator. The stator can provide AC power to a stator bus. The rotor can provide AC power to a power converter via a rotor bus. The power converter can provide an output to a line bus. The stator bus and the line bus can be coupled to an electrical grid through a transformer, such as a two-winding transformer or a three-winding transformer.

According to example aspects of the present disclosure, the rotational speed of the rotor of the doubly fed induction generator can be regulated at reduced wind speeds to increase the output power of the doubly fed induction generator system. For instance, the rotational speed of the rotor can be reduced to operate the wind turbine at or near an optimum tip-speed ratio at reduced wind speeds.

Reducing the rotor speed at cut-in wind speed can provide an increased slip at the doubly fed induction generator. In particular, slip is the difference between the operating speed and the synchronous speed of a doubly fed induction generator divided by the synchronous speed. The operating speed is the rotational speed of the rotor and the synchronous speed is the rotational speed of the magnetic field of the stator. Increased slip can cause increased rotor voltage of a doubly fed induction generator. Rotor voltage equals locked rotor voltage multiplied by slip. Accordingly, reduction of the rotational rotor speed of a doubly fed induction generator can provide an increased slip, which results in increased rotor voltage.

The lowest and highest speed points of a doubly fed induction generator system are generally limited by a voltage capability of the power converter. Other factors can include an electric grid voltage and reactive power demand. Accordingly, at cut in wind speeds, the rotational speed of the rotor of the doubly fed induction generator can be regulated such that the power converter voltage at the rotor bus does not exceed the voltage capability of the power converter. Such regulation can improve wind turbine efficiency by increasing the speed range of the rotor at cut-in wind speed and causing the wind turbine system to collect more energy from the wind.

More particularly, the rotational speed of the rotor can be regulated according to example aspects of the present disclosure based at least in part on data indicative of the rotor voltage to increase the power output of the doubly fed induction generator at reduced wind speeds. For instance, the rotational speed of the rotor can be regulated such that the rotor voltage does not exceed a voltage threshold associated with the power converter at the rotor bus. The data indicative of the rotor voltage can be determined, for instance, by one or more sensors. For instance, one or more sensors can be placed at the rotor bus to detect a voltage at the rotor of the doubly fed induction generator. This detected rotor voltage can be used by a controller (e.g. a wind farm control system and/or individual wind turbine controller) to regulate the rotational speed of the rotor such that the rotor voltage does not exceed the voltage threshold.

The data indicative of rotor voltage can further be determined in other suitable ways such as from the reactive power output of the doubly fed induction generator. For instance, a lookup table can be used by a controller to regulate the rotational rotor speed of the doubly fed induction generator. The lookup table can define a correlation between various rotor speed points and various grid voltage and reactive power /power factor conditions.

According to example aspects of the present disclosure, the rotor speed range can be further increased by reducing a reactive power output of the doubly fed induction generator at reduced wind speeds. Such reduction in reactive power output can be used to allow the doubly fed induction generator wind turbine system to operate at or near the optimum tip-speed ratio. For instance, if the rotor voltage is at the voltage threshold but the wind turbine system is not operating at the optimum tip-speed ratio, a further reduction in rotational rotor speed can be necessary for the wind turbine system to operate at or near the optimum tip-speed ratio. Accordingly, the reactive power output of the doubly fed induction generator can be reduced to facilitate such reduction in rotational rotor speed.

Rotor voltage can be dependent on electric grid voltage and reactive power demand. Accordingly, reduced reactive power output at reduced wind speeds can allow for an increased reduction in rotational speed of the rotor of the doubly fed induction generator without exceeding the voltage capabilities of the power converter. The increased reduction in rotational speed of the rotor can be such that the power converter voltage at the rotor bus does not exceed the voltage threshold.

In one example implementation, a wind farm can include a plurality of wind turbines, such as a first wind turbine system and a second wind turbine system, each coupled to an electrical grid. The wind farm can further include a control system configured to detect a reduced wind speed at a doubly fed induction generator of the first wind turbine system. For instance, the first wind turbine system can be located in the middle of the wind farm where wind speeds can be sometimes reduced relative to wind speeds at the perimeter of the wind farm. In response to detecting the reduced wind speed, the control system can be configured to control the doubly fed induction generator of the first wind turbine system to reduce the reactive power output of the first wind turbine system. This can allow for an increased reduction in rotational speed of the rotor of a doubly fed induction generator associated with the first wind turbine system. The rotational speed of the rotor can be reduced such that the voltage of a power converter coupled to the doubly fed induction generator via a rotor bus does not exceed a voltage threshold at the rotor bus.

The control system can be further configured to control the doubly fed induction generator of the second wind turbine system to increase a reactive power output of the doubly fed induction generator. Such increase in reactive power output can be determined based at least in part on a reactive power demand from the electric grid. In particular, the increased reactive power output of the second wind turbine system can compensate for the reduced reactive power output of the first wind turbine system, for instance, to meet a reactive power demand of the electrical grid.

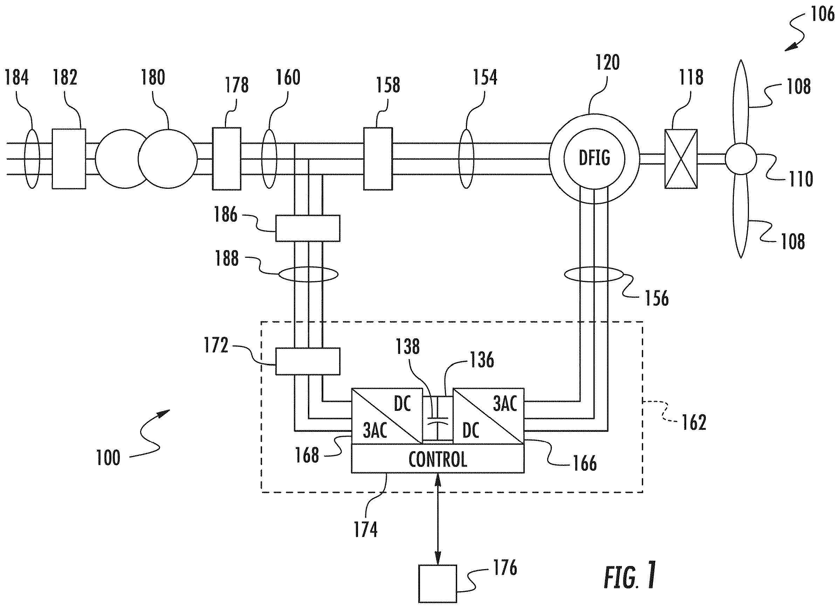

Referring now to the drawings, FIG. 1 depicts an example doubly fed induction generator (DFIG) wind turbine system 100 according to example embodiments of the present disclosure. System 100 includes a plurality of rotor blades 108 coupled to a rotating hub 110, which together define a propeller 106. The propeller 106 is coupled to an optional gear box 118, which is, in turn, coupled to a generator 120. In accordance with aspects of the present disclosure, the generator 120 is a doubly fed induction generator (DFIG) 120.

DFIG 120 is typically coupled to a stator bus 154 and a power converter 162 via a rotor bus 156. Stator bus 154 provides an output multiphase power (e.g. three-phase power) from a stator of DFIG 120 and the rotor bus 156 provides an output multiphase power (e.g. three-phase power) from a rotor of DFIG 120. DFIG 120 can further be coupled to a controller 174 to control the operation of DFIG 120. It should be noted that controller 174, in typical embodiments, is configured as an interface between DFIG 120 and a control system 176. Controller 174 can include any number of control devices. In one implementation, controller 174 can include a processing device (e.g. microprocessor, microcontroller, etc.) executing computer-readable instructions stored in a computer-readable medium. The instructions when executed by the processing device can cause the processing device to perform operations, including providing control commands to DFIG 120.

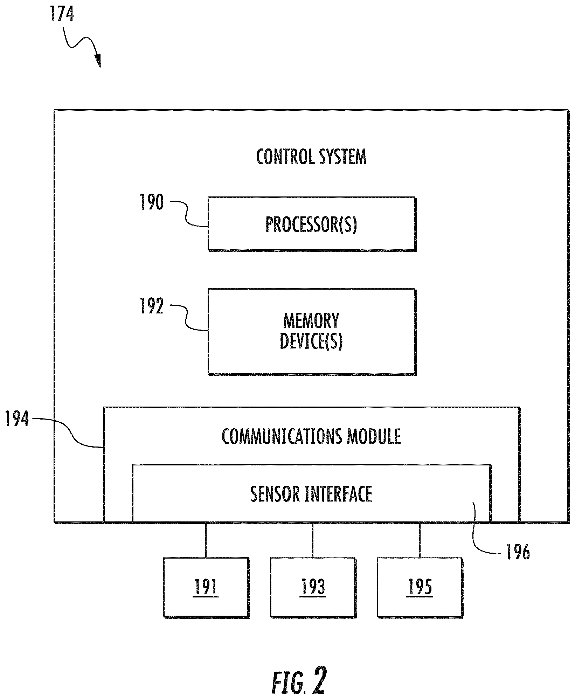

For example, as shown particularly in FIG. 2, controller 174 can include any number of control devices. In one implementation, for example, controller 174 can include one or more processor(s) 190 and associated memory device(s) 192 configured to perform a variety of computer-implemented functions and/or instructions (e.g., performing the methods, steps, calculations and the like and storing relevant data as disclosed herein). The instructions when executed by the processor 190 can cause the processor 190 to perform operations, including providing control commands (e.g. pulse width modulation commands) to the switching elements of the power converter 162 and other aspects of the power system 100. Additionally, controller 174 may also include a communications module 194 to facilitate communications between the control system 174 and the various components of the power system 100, such as any of the components of FIG. 1.

Further, the communications module 194 may include a sensor interface 196 (e.g., one or more analog-to-digital converters) to permit signals transmitted from one or more sensors to be converted into signals that can be understood and processed by the processors 190. It should be appreciated that the sensors (e.g. sensors 191, 193, 195) may be communicatively coupled to the communications module 194 using any suitable means. For example, as shown in FIG. 2, the sensors 191, 193, 195 are coupled to the sensor interface 196 via a wired connection. However, in other embodiments, the sensors 191, 193, 195 may be coupled to the sensor interface 196 via a wireless connection, such as by using any suitable wireless communications protocol known in the art. As such, the processor 190 may be configured to receive one or more signals from the sensors.

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. The processor 190 is also configured to compute advanced control algorithms and communicate to a variety of Ethernet or serial-based protocols (Modbus, OPC, CAN, etc.). Additionally, the memory device(s) 192 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magnetooptical disk (MOD), a digital versatile disc (DVD) and/or other suitable memory elements. Such memory device(s) 192 may generally be configured to store suitable computer-readable instructions that, when implemented by the processor(s) 190, configure controller 174 to perform the various functions as described herein.

Referring back to FIG. 1, DFIG 120 is coupled via rotor bus 156 to a rotor side converter 166. Rotor side converter 166 is coupled to a line side converter 168, which, in turn, is coupled to a line side bus 188. In example configurations, rotor side converter 166 and line side converter 168 are configured for normal operating mode in a three-phase, pulse width modulation (PWM) arrangement using insulated gate bipolar transistors (IGBT) switching elements. Rotor side converter 166 and line side converter 168 can be coupled via a DC link 136 across which is a DC link capacitor 138.

Power converter 162 can also be coupled to controller 174 to control the operation of rotor side converter 166 and line side converter 168. In one implementation, further instructions stored in controller 174, when executed by the processing device, can cause the processing device to perform operations, including providing control commands (e.g. pulse width modulation commands) to the switching elements of power converter 162.

In typical configurations, various line contactors and circuit breakers including, for example, grid breaker 182 can be included for isolating the various components as necessary for normal operation of DFIG 120 during connection to and disconnection from the electrical grid 184. A system circuit breaker 178 can couple a system bus 160 to a transformer 180, which is coupled to an electrical grid 184 via grid breaker 182. Although transformer 180 depicts a two winding transformer, other suitable transformers can be used, such as a three-winding transformer. In an embodiment using a three-winding transformer, the line bus 188 can be coupled to one winding of the transformer, the stator bus 154 can be coupled to another winding of the transformer, and the grid 184 can be coupled to another winding of the transformer.

In operation, alternating current power generated at DFIG 120 by rotating rotor 106 is provided via a dual path to electrical grid 184. The dual paths are defined by stator bus 154 and rotor bus 156. On the rotor bus side 156, sinusoidal multi-phase (e.g. three-phase) alternating current (AC) power is provided to power converter 162. Rotor side power converter 166 converts the AC power provided from rotor bus 156 into direct current (DC) power and provides the DC power to DC link 136. Switching elements (e.g. IGBTs) used in parallel bridge circuits of rotor side power converter 166 can be modulated to convert the AC power provided from rotor bus 156 into DC power suitable for DC link 136.

Line side converter 168 converts the DC power on DC link 136 into AC output power suitable for electrical grid 184. In particular, switching elements (e.g. IGBTs) used in bridge circuits of line side power converter 168 can be modulated to convert the DC power on DC link 136 into AC power on line side bus 188. The AC power from power converter 162 can be combined with the power from the stator of DFIG 120 to provide multi-phase power (e.g. three-phase power) having a frequency maintained substantially at the frequency of electrical grid 184 (e.g. 50 Hz/60 Hz).

Various circuit breakers and switches, such as grid breaker 182, system breaker 178, stator sync switch 158, converter breaker 186, and line contactor 172 can be included in system 100 to connect or disconnect corresponding buses, for example, when current flow is excessive and can damage components of wind turbine system 100 or for other operational considerations. Additional protection components can also be included in wind turbine system 100.

DFIG 120 and power converter 162 can receive control signals from, for instance, control system 176 via controller 174. The control signals can be based, among other things, on sensed conditions or operating characteristics of wind turbine system 100. Typically, the control signals provide for control of the operation of DFIG 120 and/or power converter 162. For example, feedback in the form of a voltage at rotor bus 156 of power converter 162 can be used to regulate the rotational speed of the rotor of DFIG 120. As another example, feedback in the form of sensed rotor speed of DFIG 120 can be used to control the conversion of the output power from rotor bus 156 to maintain a proper and balanced multi-phase (e.g. three-phase) power supply. Other feedback from other sensors can also be used by controller 174 to control DFIG 120 and/or power converter 162, including, for example, stator and rotor bus voltages and current feedbacks. Using the various forms of feedback information, switching control signals (e.g. gate timing commands for IGBTs), stator synchronizing control signals, and circuit breaker signals can be generated.

According to aspects of the present disclosure, the rotational speed of the rotor of DFIG 120 can be regulated based at least in part on a voltage threshold associated with power converter 166 at rotor bus 156. In particular, the wind speed range of system 100 can be limited by a voltage capability of power converter 162. In particular, the minimum and maximum wind speed points of system 100 can be limited by the voltage capability of power converter 162. The voltage threshold associated with power converter 162 can be determined based at least in part on the voltage capability of power converter 162. Accordingly, at cut-in wind speed, controller 174 can be configured to control DFIG 120 to reduce the rotational speed of the rotor of DFIG 120 such that the voltage of power converter 162 at rotor bus 156 does not exceed the voltage threshold associated with power converter 162.

For instance, for an 1800V IGBT converter, the voltage capability can be in the range of about 759 V. As used herein, the use of the term "about" in conjunction with a numerical value is intended to refer to within about 25% of the numerical value. This voltage constraint can cause system 100 to lose energy at cut-in wind speed. Accordingly, at a power factor of 1, the rotational speed of the rotor of a 50 Hz DFIG can be reduced to 925 rpm at cut-in wind speed as opposed to 1080 rpm, at which the DFIG would normally operate.

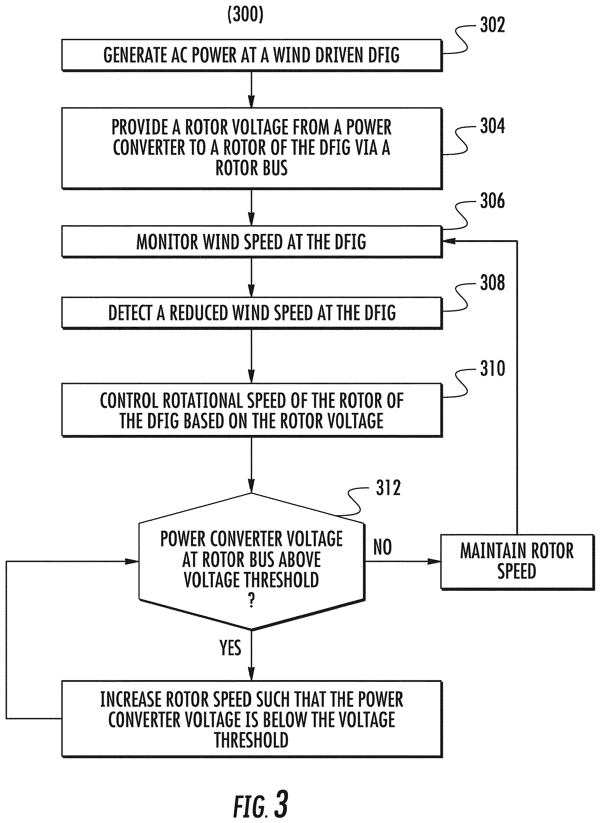

FIG. 3 depicts a flow diagram for an example method (300) of increasing power output of a DFIG wind turbine system according to example embodiments of the present disclosure. FIG. 3 depicts steps performed in a particular order for purposes of illustration and discussion. Those of ordinary skill in the art, using the disclosures provided herein, will understand that various steps of any of the methods disclosed herein can be adapted, omitted, rearranged, or expanded in various ways without deviating from the scope of the present disclosure.

At (302), method (300) can include generating alternating current power at a wind driven doubly fed induction generator. The alternating current power can be provided to a stator bus from a stator of the wind driven doubly fed induction generator. At (304), method (300) can include providing a rotor voltage from a power converter to a rotor of the wind driven doubly fed induction generator via a rotor bus.

At (306), method (300) can include monitoring wind speed at the wind driven doubly fed induction generator. The wind speed can be determined, for instance by an anemometer associated with the wind driven doubly fed induction generator.

At (308), method (300) can include detecting a reduced wind speed at the wind driven doubly fed induction generator. The reduced wind speed can be, for instance, the cut-in speed for the wind driven doubly fed induction generator.

In response to detecting the reduced wind speed, at (310), method (300) can include controlling the rotational speed of the rotor of the wind driven doubly fed induction generator based at least in part on data indicative of the rotor voltage. The data indicative of the rotor voltage can include signals from one or more sensors at the rotor bus and/or data in a lookup table correlating various rotor speed points with various grid voltage and reactive power/power factor conditions.

According to particular aspects of the present disclosure, the rotational rotor speed can be reduced such that the rotor voltage does not exceed a voltage threshold associated with the power converter at the rotor bus. For instance, a controller can send control commands to the wind driven doubly fed induction generator to reduce the rotational rotor speed of the wind driven doubly fed induction generator from a first rotational speed to a second rotational speed. The second rotational speed can be determined such that the wind turbine system operates, for instance, at or near an optimum tip-speed ratio to increase the power output of the doubly fed induction generator. The second rotational speed can further be determined such that the power converter voltage at the rotor bus does not exceed the voltage threshold.

At (312), method (300) can include further controlling the rotational speed of the rotor of the wind driven doubly fed induction generator based at least in part on the voltage threshold associated with the power converter. If the power converter voltage on the rotor side exceeds the voltage threshold, (312) can include increasing the rotational speed of the rotor to decrease the slip and the rotor voltage of the doubly fed induction generator. The rotational rotor speed can be increased such that the power converter voltage at the rotor bus does not exceed the voltage threshold. If the voltage does not exceed the voltage threshold, (312) can include maintaining the rotational speed of the rotor of the DFIG and method (300) can include returning to (306).

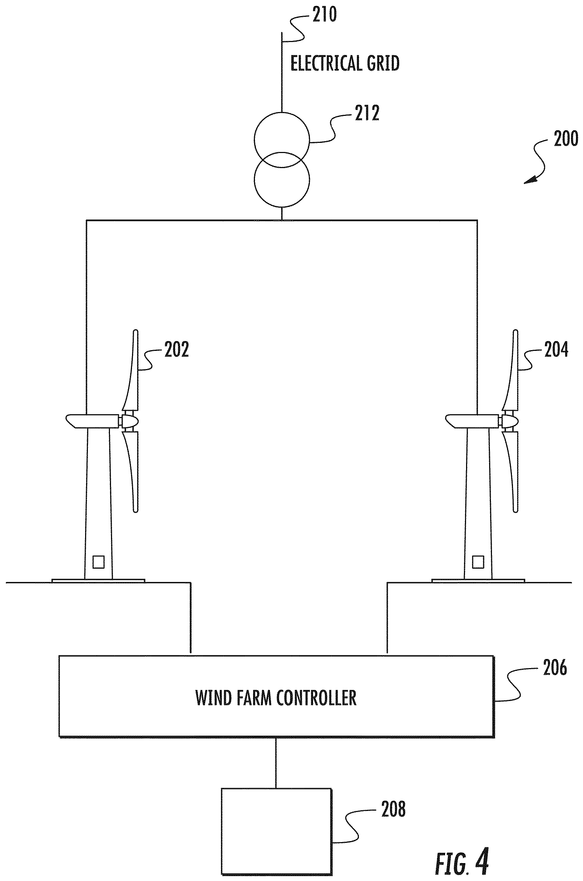

According to example aspects of the present disclosure, a plurality of wind turbine systems, such as wind turbine system 100 depicted in FIG. 1, can be a part of a wind farm. FIG. 4 depicts an example wind farm 200 according to example embodiments of the present disclosure. Wind farm 200 includes wind turbine system 202 and wind turbine system 204. Wind turbine systems 202 and 204 can be DFIG systems, such as system 100 as described in FIG. 1. Although only two wind turbine systems are depicted, it will be appreciated by those skilled in the art that any suitable number of wind turbine systems can be included in wind farm 200. Wind turbine systems 202 and 204 can each be coupled to wind farm controller 206. Wind farm controller 206, in typical embodiments, is configured as an interface between wind farm 200 and a control system 208. Wind farm controller 206 can include any number of control devices. In one implementation, wind farm control system can include a processing device (e.g. microprocessor, microcontroller, etc.) executing computer-readable instructions stored in a computer-readable medium. The instructions when executed by the processing device can cause the processing device to perform operations, including providing control commands to wind turbine systems 202 and 204.

Wind farm 200 can further be coupled to an electrical grid 210 via a transformer 212. Transformer 212 comprises a two-winding transformer, but it will be appreciated by those skilled in the art that various other suitable transformers can be used, such as a three-winding transformer. Wind farm 200 can output multiphase power (e.g. three-phase power) to electrical grid 210 via transformer 212. The output power level of wind farm 200 can be controlled at least in part by wind farm controller 206.

In particular, wind farm controller 206 can receive command values from, for instance, control system 208, indicative of target power values for wind farm 200. Target power values can include active power values and/or reactive power values. The target power values can be determined based at least in part on a power demand from electrical grid 210. Further, wind farm controller 206 can receive measurement data indicative of wind farm 200 active power, reactive power, voltage, frequency at the grid connecting point, etc.

Further still, wind farm controller 206 can receive turbine measurement data from wind turbine systems 202 and 204. For instance, turbine measurement data can include the frequency of power output from a DFIG, voltages, currents, active power outputs, reactive power outputs, wind speed, power factor, etc. Based at least in part on the various received data, wind farm controller 206 can determine command values for wind turbine systems 202 and 204. Wind turbine systems 202 and 204 can then use control systems included in wind turbine systems 202 and 204, such as control system 176 depicted in FIG. 1, to control the respective wind turbine systems 202 and 204 in accordance with the command values from wind farm controller 206.

In example embodiments, wind farm controller 206 can determine command controls for wind turbine systems 202 and 204 based at least in part on a lookup table. The lookup table can define a correlation between various rotor speed points and various electric grid voltage and reactive power demand conditions.

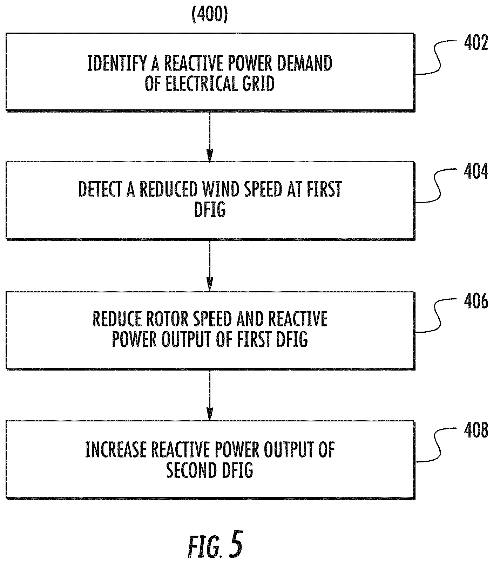

FIG. 5 depicts a flow diagram of an example method (400) for increasing the power output of a wind farm at reduced wind speeds according to example embodiments of the present disclosure. The rotor speed range of a doubly fed induction generator can be further increased by reducing a reactive power output at reduced wind speeds. Accordingly, at (402), method 400 can include identifying a reactive power demand of an electrical grid. The electrical grid can be coupled to a wind farm, such as wind farm 200 depicted in FIG. 4. The wind farm can include, for instance, a first doubly fed induction generator and a second doubly fed induction generator. The reactive power demand of the electrical grid can be determined based at least in part on various grid conditions associated with the electrical loads coupled to the grid.

At (404), method (400) can include detecting a reduced wind speed at the first doubly fed induction generator. The reduced wind speed can be, for instance, the cut-in wind speed of the doubly fed induction generator. In response to detecting the reduced wind speed at the first doubly fed induction generator, at (406), method (400) can include reducing the reactive power output and the rotational rotor speed of the doubly fed induction generator to increase power output of the doubly fed induction generator. The rotational speed can be reduced such that the voltage of a power converter coupled to the rotor of the doubly fed induction generator does not exceed a voltage threshold at the rotor bus.

The reduced reactive power output can allow for an increased reduction in rotational rotor speed of the doubly fed induction generator. The increased reduction of rotational speed of the rotor can be such that the voltage at the rotor bus of the power converter does not exceed the voltage threshold associated with the power converter.

At (408), method 400 can include increasing a reactive power output of the second doubly fed induction generator. The reactive power output of the second doubly fed induction generator can be determined based at least in part on the identified electrical grid reactive power demand. For instance, the reactive power output of the second doubly fed induction generator can be increased to compensate for the decreased reactive power output of the first doubly fed induction generator. The increased reactive power output of the second doubly fed induction generator can be determined such that the overall reactive power output of the wind farm meets the required reactive power demand for the wind farm from the electrical grid.

### EXAMPLE

Table 1 displays example simulation results according to example embodiments of the present disclosure. In particular, Table 1 displays power outputs of a doubly fed induction generator at reduced wind speeds for different rotational rotor speeds. For instance, as indicated by Table 1, at a wind speed of 4 m/s, reducing the rotational rotor speed from 1065 rpm to 925 rpm provides a 31 kW increase in power output of the doubly fed induction generator.

**Table 1**

| | 1065 rpm | 925 rpm | Difference |
|---|---|---|---|
| Wind Speed [m/s] | Power [kW] | Power [kW] | Power [kW] |
| 3.00 | 5 | 29 | 24 |
| 3.50 | 63 | 90 | 17 |
| 4.00 | 129 | 160 | 31 |
| 4.50 | 225 | 239 | 14 |
| 5.00 | 301 | 328 | 27 |
| 5.50 | 470 | 474 | 4 |
| 6.00 | 589 | 597 | 8 |

This written description uses examples to disclose the invention, including the preferred mode, and also to enable any person skilled in the art to practice the invention, including making and using any devices or systems and performing any incorporated methods. The patentable scope of the invention is defined by the claims.

## Claims

1. A wind turbine system (100), comprising:
a wind driven doubly fed induction generator (120) having a rotor and a stator, the stator providing AC power to a stator bus (154);
a power converter (162) coupled to the rotor of the doubly fed induction generator (120) via a rotor bus (156), the power converter (162) providing an output to a line bus (18), the power converter (162) having an associated voltage threshold at the rotor bus (156); and
a control system (176) configured to identify a reduced wind speed at the doubly fed induction generator (120);
wherein, at the reduced wind speed, the control system (176) is further configured to reduce the rotational speed of the rotor of the doubly fed induction generator (120) from a first rotational speed to a second rotational speed based at least in part on data indicative of a rotor voltage to increase the power output of the doubly fed induction generator (120), the control system (176) regulating the rotational speed of the rotor such that the rotor voltage does not exceed a voltage threshold associated with the power converter (162) at the rotor bus (156), and **characterized in that** the second rotational speed of the rotor of the doubly fed induction generator (120) is determined based at least in part on a tip-speed-ratio associated with the wind turbine, the tip-speed-ratio being the ratio between the tangential speed of the tip of a blade of the wind turbine, and the wind speed.

2. The wind turbine (100) system of claim 1, wherein the reduction in the rotational speed of the rotor of the doubly fed induction generator (120) provides increased slip at the doubly fed induction generator.

3. The wind turbine system (100) of any preceding claim, wherein the data indicative of the rotor voltage can be determined based at least in part one or more sensors (195) configured to monitor the voltage at the rotor bus (156).

4. The wind turbine system (100) of any preceding claim, wherein the data indicative of the rotor voltage can be determined based at least in part on a reactive power output of the doubly fed induction generator (120).

5. The wind turbine system (100) of any preceding claim, wherein the data indicative of the rotor voltage comprises a lookup table, the lookup table defining a correlation between various rotor speed points and various electric grid voltage and reactive power demand conditions, a reduced rotational speed of the rotor of the doubly fed induction generator (120) being determined based at least in part on the lookup table.

6. The wind turbine system (100) of any preceding claim, wherein the control system (176) is configured to regulate the rotational speed based at least in part on an electrical grid voltage.

7. The wind turbine system (100) of any preceding claim, wherein, at the reduced wind speed, the control system (176) is configured to reduce a reactive power output of the doubly fed induction generator (120) to allow for an increased reduction in rotational speed of the rotor of the doubly fed induction generator (120).

8. A method (300) for increasing power output of a wind driven doubly fed induction generator (120) at reduced wind speeds, the method comprising:
generating (302) alternating current power at a wind driven doubly fed induction generator (120), the alternating current power provided to a stator bus (154) from a stator of the wind driven doubly fed induction generator (120);
providing (304) a rotor voltage from a power converter (162) to a rotor of the wind driven doubly fed induction generator (120) via a rotor bus (156);
detecting (308) a reduced wind speed at the wind driven doubly fed induction generator (120); and
in response to detecting the reduced wind speed, reducing (310) the rotational speed of the rotor from a first rotational speed to a second rotational speed based at least in part on data indicative of the rotor voltage to increase the power output of the doubly fed induction generator (120), the second rotational speed being determined such that the rotor voltage does not exceed a voltage threshold associated with the power converter (162) at the rotor bus (156), **characterized in that** the reduced second rotational speed of the rotor of the doubly fed induction generator (120) is determined based at least in part on a tip-speed-ratio, the tip-speed-ratio being the ratio between the tangential speed of the tip of a blade of the wind turbine, and the wind speed.

9. The method (300) of claim 8, wherein the data indicative of the rotor voltage can be determined based at least in part one or more sensors (195) configured to monitor the voltage at the rotor bus (156).

10. The method (300) of any of claims 8 to 9, wherein the data indicative of the rotor voltage can be determined based at least in part on a reactive power output of the doubly fed induction generator (120).

11. The method (300) of any of claims 8 to 10, wherein the method comprises:
reducing a reactive power output of the wind driven doubly fed induction generator (120); and
reducing the rotational speed of the rotor of the wind driven doubly fed induction generator (120) to a third rotational speed, the third rotational speed being less than the first rotational speed.

12. The method (300) of any of claims 8 to 11, wherein reducing the second rotational speed of the rotor of the doubly fed induction generator (120) provides increased slip of the doubly fed induction generator (120).

13. A wind farm (200), the wind farm (200) comprising:
a first wind turbine system (100) having a first doubly fed induction generator (120), the first doubly fed induction generator (120) having a rotor and a stator, the rotor being coupled via a rotor bus (156) to a power converter (162) having an associated voltage threshold at the rotor bus (156);
a second wind turbine system (100) having a second doubly fed induction generator (120), the second doubly fed induction generator (120) having a rotor and a stator; and
a control system (176), the control system (176) configured to detect a reduced wind speed at the first doubly fed induction generator;
wherein in response to detecting the reduced wind speed at the first doubly fed induction generator, the control system is configured to control the first doubly fed induction generator (120) to reduce a reactive power output of the first doubly fed induction generator (120) and to reduce the rotational speed of the rotor of the first doubly fed induction generator (120) from a first rotational speed to a second rotational speed to increase power output of the first doubly fed induction generator so that a rotor voltage does not exceed the voltage threshold,
wherein, at the reduced wind speed, the control system (176) is configured to reduce the rotational speed of the rotor of the first doubly fed induction generator (120) from the first rotational speed to the second rotational speed which is determined based at least in part on a tip-speed-ratio associated with the first wind turbine system (100), the tip-speed-ratio being the ratio between the tangential speed of the tip of a blade of the first wind turbine system (100), and the wind speed, and
wherein the control system (176) is further configured to control the second doubly fed induction generator (120) to increase a reactive power output of the second doubly fed induction generator (120).

## Patentansprüche

1. Windturbinensystem (100), umfassend:
einen windgetriebenen doppelt gespeisten Induktionsgenerator (120), der einen Rotor und einen Stator aufweist, wobei der Stator Wechselstromleistung (AC-Leistung) an einen Statorbus (154) bereitstellt;
einen Leistungswandler (162), der mit dem Rotor des doppelt gespeisten Induktionsgenerators (120) über einen Rotorbus (156) gekoppelt ist, wobei der Leistungswandler (162) einen Ausgang an einen Leitungsbus (18) bereitstellt, wobei der Leistungswandler (162) einen zugeordneten Spannungsschwellenwert an dem Rotorbus (156) aufweist; und
ein Steuersystem (176), das dazu konfiguriert ist, eine reduzierte Windgeschwindigkeit an dem doppelt gespeisten Induktionsgenerator (120) zu identifizieren;
wobei das Steuersystem (176) bei der reduzierten Windgeschwindigkeit ferner dazu konfiguriert ist, die Drehzahl des Rotors des doppelt gespeisten Induktionsgenerators (120) von einer ersten Drehzahl auf eine zweite Drehzahl zu reduzieren, mindestens teilweise basierend auf Daten, die eine Rotorspannung angeben, um den Leistungsausgang des doppelt gespeisten Induktionsgenerators (120) zu erhöhen, wobei das Steuersystem (176) die Drehzahl des Rotors so regelt, dass die Rotorspannung einen dem Leistungswandler (162) zugeordneten Spannungsschwellenwert am Rotorbus (156) nicht überschreitet, und **dadurch gekennzeichnet, dass** die zweite Drehzahl des Rotors des doppelt gespeisten Induktionsgenerators (120) mindestens teilweise basierend auf einem Spitzengeschwindigkeitsverhältnis bestimmt wird, das der Windturbine zugeordnet ist, wobei das Spitzengeschwindigkeitsverhältnis das Verhältnis zwischen der Tangentialgeschwindigkeit der Spitze eines Blatts der Windturbine und der Windgeschwindigkeit ist.

2. Windturbinensystem (100) nach Anspruch 1, wobei die Reduzierung der Drehzahl des Rotors des doppelt gespeisten Induktionsgenerators (120) einen erhöhten Schlupf an dem doppelt gespeisten Induktionsgenerator bereitstellt.

3. Windturbinensystem (100) nach einem der vorstehenden Ansprüche, wobei die Daten, die die Rotorspannung angeben, mindestens teilweise basierend auf einem oder mehreren Sensoren (195) bestimmt werden können, die dazu konfiguriert sind, die Spannung am Rotorbus (156) zu überwachen.

4. Windturbinensystem (100) nach einem der vorstehenden Ansprüche, wobei die Daten, die die Rotorspannung angeben, mindestens teilweise basierend auf einem Blindleistungsausgang des doppelt gespeisten Induktionsgenerators (120) bestimmt werden können.

5. Windturbinensystem (100) nach einem der vorstehenden Ansprüche, wobei die Daten, die die Rotorspannung angeben, eine Nachschlagetabelle umfassen, wobei die Nachschlagetabelle eine Korrelation zwischen verschiedenen Rotordrehzahlpunkten und verschiedenen elektrischen Netzspannungs- und Blindleistungsbedarfsbedingungen definiert, wobei eine reduzierte Drehzahl des Rotors des doppelt gespeisten Induktionsgenerators (120) mindestens teilweise basierend auf der Nachschlagetabelle bestimmt wird.

6. Windturbinensystem (100) nach einem der vorstehenden Ansprüche, wobei das Steuersystem (176) dazu konfiguriert ist, die Drehzahl mindestens teilweise basierend auf einer elektrischen Netzspannung zu regeln.

7. Windturbinensystem (100) nach einem der vorstehenden Ansprüche, wobei das Steuersystem (176) bei der reduzierten Windgeschwindigkeit dazu konfiguriert ist, einen Blindleistungsausgang des doppelt gespeisten Induktionsgenerators (120) zu reduzieren, um eine erhöhte Reduzierung der Drehzahl des Rotors des doppelt gespeisten Induktionsgenerators (120) zu ermöglichen.

8. Verfahren (300) zum Erhöhen des Leistungsausgangs eines windgetriebenen doppelt gespeisten Induktionsgenerators (120) bei reduzierten Windgeschwindigkeiten, wobei das Verfahren umfasst:
Erzeugen (302) von Wechselstromleistung an einem windgetriebenen doppelt gespeisten Induktionsgenerator (120), wobei die Wechselstromleistung einem Statorbus (154) von einem Stator des windgetriebenen doppelt gespeisten Induktionsgenerators (120) bereitgestellt wird;
Bereitstellen (304) einer Rotorspannung von einem Leistungswandler (162) an einen Rotor des windgetriebenen doppelt gespeisten Induktionsgenerators (120) über einen Rotorbus (156);
Erfassen (308) einer reduzierten Windgeschwindigkeit an dem windgetriebenen doppelt gespeisten Induktionsgenerator (120); und
als Reaktion auf das Erfassen der reduzierten Windgeschwindigkeit, Reduzieren (310) der Drehzahl des Rotors von einer ersten Drehzahl auf eine zweite Drehzahl mindestens teilweise basierend auf Daten, die die Rotorspannung angeben, um den Leistungsausgang des doppelt gespeisten Induktionsgenerators (120) zu erhöhen, wobei die zweite Drehzahl so bestimmt wird, dass die Rotorspannung einen Spannungsschwellenwert, der dem Leistungswandler (162) am Rotorbus (156) zugeordnet ist, nicht überschreitet, **dadurch gekennzeichnet, dass** die reduzierte zweite Drehzahl des Rotors des doppelt gespeisten Induktionsgenerators (120) mindestens teilweise basierend auf einem Spitzengeschwindigkeitsverhältnis bestimmt wird, wobei das Spitzengeschwindigkeitsverhältnis das Verhältnis zwischen der Tangentialgeschwindigkeit der Spitze eines Blatts der Windturbine und der Windgeschwindigkeit ist.

9. Verfahren (300) nach Anspruch 8, wobei die Daten, die die Rotorspannung angeben, mindestens teilweise basierend auf einem oder mehreren Sensoren (195) bestimmt werden können, die dazu konfiguriert sind, die Spannung an dem Rotorbus (156) zu überwachen.

10. Verfahren (300) nach einem der Ansprüche 8 bis 9, wobei die Daten, die die Rotorspannung angeben, mindestens teilweise basierend auf einem Blindleistungsausgang des doppelt gespeisten Induktionsgenerators (120) bestimmt werden können.

11. Verfahren (300) nach einem der Ansprüche 8 bis 10, wobei das Verfahren umfasst:
Reduzieren eines Blindleistungsausgangs des windgetriebenen doppelt gespeisten Induktionsgenerators (120); und
Reduzieren der Drehzahl des Rotors des windgetriebenen doppelt gespeisten Induktionsgenerators (120) auf eine dritte Drehzahl, wobei die dritte Drehzahl geringer als die erste Drehzahl ist.

12. Verfahren (300) nach einem der Ansprüche 8 bis 11, wobei das Reduzieren der zweiten Drehzahl des Rotors des doppelt gespeisten Induktionsgenerators (120) einen erhöhten Schlupf des doppelt gespeisten Induktionsgenerators (120) bereitstellt.

13. Windenergiepark (200), wobei der Windenergiepark (200) umfasst:
ein erstes Windturbinensystem (100), das einen ersten doppelt gespeisten Induktionsgenerator (120) aufweist, wobei der erste doppelt gespeiste Induktionsgenerator (120) einen Rotor und einen Stator aufweist, wobei der Rotor über einen Rotorbus (156) mit einem Leistungswandler (162) gekoppelt ist, der einen zugeordneten Spannungsschwellenwert an dem Rotorbus (156) aufweist;
ein zweites Windturbinensystem (100), das einen zweiten doppelt gespeisten Induktionsgenerator (120) aufweist, wobei der zweite doppelt gespeiste Induktionsgenerator (120) einen Rotor und einen Stator aufweist; und
ein Steuersystem (176), wobei das Steuersystem (176) dazu konfiguriert ist, eine reduzierte Windgeschwindigkeit an dem ersten doppelt gespeisten Induktionsgenerator zu erfassen;
wobei das Steuersystem als Reaktion auf das Erfassen der reduzierten Windgeschwindigkeit an dem ersten doppelt gespeisten Induktionsgenerator dazu konfiguriert ist, den ersten doppelt gespeisten Induktionsgenerator (120) zu steuern, um einen Blindleistungsausgang des ersten doppelt gespeisten Induktionsgenerators (120) zu reduzieren und die Drehzahl des Rotors des ersten doppelt gespeisten Induktionsgenerator (120) von einer ersten Drehzahl auf eine zweite Drehzahl zu reduzieren, um den Leistungsausgang des ersten doppelt gespeisten Induktionsgenerators zu erhöhen, sodass eine Rotorspannung den Spannungsschwellenwert nicht überschreitet,
wobei das Steuersystem (176) bei der reduzierten Windgeschwindigkeit dazu konfiguriert ist, die Drehzahl des Rotors des ersten doppelt gespeisten Induktionsgenerators (120) von der ersten Drehzahl auf die zweite Drehzahl zu reduzieren, die mindestens teilweise basierend auf einem dem ersten Windturbinensystem (100) zugeordneten Spitzengeschwindigkeitsverhältnis bestimmt wird, wobei das Spitzengeschwindigkeitsverhältnis das Verhältnis zwischen der Tangentialgeschwindigkeit der Spitze eines Blatts des ersten Windturbinensystems (100) und der Windgeschwindigkeit ist, und
wobei das Steuersystem (176) ferner dazu konfiguriert ist, den zweiten doppelt gespeisten Induktionsgenerator (120) zu steuern, um einen Blindleistungsausgang des zweiten doppelt gespeisten Induktionsgenerators (120) zu erhöhen.

## Revendications

1. Système de turbine éolienne (100), comprenant :
un générateur à induction à double alimentation à entraînement éolien (120) ayant un rotor et un stator, le stator fournissant de la puissance CA à un bus de stator (154) ;
un convertisseur de puissance (162) couplé au rotor du générateur à induction à double alimentation (120) par l'intermédiaire d'un bus de rotor (156), le convertisseur de puissance (162) fournissant une sortie à un bus de ligne (18), le convertisseur de puissance (162) ayant un seuil de tension associé au niveau du bus de rotor (156) ; et
un système de commande (176) configuré pour identifier une vitesse de vent réduite au niveau du générateur à induction à double alimentation (120) ;
dans lequel, à la vitesse de vent réduite, le système de commande (176) est en outre configuré pour réduire la vitesse de rotation du rotor du générateur à induction à double alimentation (120) d'une première vitesse de rotation à une deuxième vitesse de rotation sur la base au moins en partie de données indicatives d'une tension de rotor pour augmenter la sortie de puissance du générateur à induction à double alimentation (120), le système de commande (176) régulant la vitesse de rotation du rotor de sorte que la tension de rotor ne dépasse pas un seuil de tension associé au convertisseur de puissance (162) au niveau du bus de rotor (156), et **caractérisé en ce que** la deuxième vitesse de rotation du rotor du générateur à induction à double alimentation (120) est déterminée sur la base au moins en partie d'un rapport de vitesse d'extrémité associé à la turbine éolienne, le rapport de vitesse d'extrémité étant le rapport entre la vitesse tangentielle de l'extrémité d'une pale de la turbine éolienne, et la vitesse de vent.

2. Système de turbine éolienne (100) selon la revendication 1, dans lequel la réduction de la vitesse de rotation du rotor du générateur à induction à double alimentation (120) fournit un glissement accru au niveau du générateur à induction à double alimentation.

3. Système de turbine éolienne (100) selon une quelconque revendication précédente, dans lequel les données indicatives de la tension de rotor peuvent être déterminées sur la base au moins en partie d'un ou plusieurs capteurs (195) configurés pour surveiller la tension au niveau du bus de rotor (156).

4. Système de turbine éolienne (100) selon une quelconque revendication précédente, dans lequel les données indicatives de la tension de rotor peuvent être déterminées sur la base au moins en partie d'une sortie de puissance réactive du générateur à induction à double alimentation (120).

5. Système de turbine éolienne (100) selon une quelconque revendication précédente, dans lequel les données indicatives de la tension de rotor comprennent une table de correspondance, la table de correspondance définissant une corrélation entre divers points de vitesse de rotor et diverses conditions de tension de réseau électrique et de demande de puissance réactive, une vitesse de rotation réduite du rotor du générateur à induction à double alimentation (120) étant déterminée sur la base au moins en partie de la table de correspondance.

6. Système de turbine éolienne (100) selon une quelconque revendication précédente, dans lequel le système de commande (176) est configuré pour réguler la vitesse de rotation sur la base au moins en partie d'une tension de réseau électrique.

7. Système de turbine éolienne (100) selon une quelconque revendication précédente, dans lequel, à la vitesse de vent réduite, le système de commande (176) est configuré pour réduire une sortie de puissance réactive du générateur à induction à double alimentation (120) pour permettre une réduction accrue de vitesse de rotation du rotor du générateur à induction à double alimentation (120).

8. Procédé (300) pour augmenter la sortie de puissance d'un générateur à induction à double alimentation à entraînement éolien (120) à des vitesses de vent réduites, le procédé comprenant :
la génération (302) de puissance à courant alternatif au niveau d'un générateur à induction à double alimentation à entraînement éolien (120), la puissance à courant alternatif étant fournie à un bus de stator (154) depuis un stator du générateur à induction à double alimentation à entraînement éolien (120) ;
la fourniture (304) d'une tension de rotor depuis un convertisseur de puissance (162) vers un rotor du générateur à induction à double alimentation à entraînement éolien (120) par l'intermédiaire d'un bus de rotor (156) ;
la détection (308) d'une vitesse de vent réduite au niveau du générateur à induction à double alimentation à entraînement éolien (120) ; et
en réponse à la détection de la vitesse de vent réduite, la réduction (310) de la vitesse de rotation du rotor d'une première vitesse de rotation à une deuxième vitesse de rotation sur la base au moins en partie de données indicatives de la tension de rotor pour augmenter la sortie de puissance du générateur à induction à double alimentation (120), la deuxième vitesse de rotation étant déterminée de sorte que la tension de rotor ne dépasse pas un seuil de tension associé au convertisseur de puissance (162) au niveau du bus de rotor (156), **caractérisé en ce que** la deuxième vitesse de rotation réduite du rotor du générateur à induction à double alimentation (120) est déterminée sur la base au moins en partie d'un rapport de vitesse d'extrémité, le rapport de vitesse d'extrémité étant le rapport entre la vitesse tangentielle de l'extrémité d'une pale de la turbine éolienne, et la vitesse de vent.

9. Procédé (300) selon la revendication 8, dans lequel les données indicatives de la tension de rotor peuvent être déterminées sur la base au moins en partie d'un ou plusieurs capteurs (195) configurés pour surveiller la tension au niveau du bus de rotor (156).

10. Procédé (300) selon l'une quelconque des revendications 8 à 9, dans lequel les données indicatives de la tension de rotor peuvent être déterminées sur la base au moins en partie d'une sortie de puissance réactive du générateur à induction à double alimentation (120).

11. Procédé (300) selon l'une quelconque des revendications 8 à 10, dans lequel le procédé comprend :
la réduction d'une sortie de puissance réactive du générateur à induction à double alimentation à entraînement éolien (120) ; et
la réduction de la vitesse de rotation du rotor du générateur à induction à double alimentation à entraînement éolien (120) à une troisième vitesse de rotation, la troisième vitesse de rotation étant inférieure à la première vitesse de rotation.

12. Procédé (300) selon l'une quelconque des revendications 8 à 11, dans lequel la réduction de la deuxième vitesse de rotation du rotor du générateur à induction à double alimentation (120) fournit un glissement accru du générateur à induction à double alimentation (120).

13. Parc à éoliennes (200), le parc à éoliennes (200) comprenant :
un premier système de turbine éolienne (100) ayant un premier générateur à induction à double alimentation (120), le premier générateur à induction à double alimentation (120) ayant un rotor et un stator, le rotor étant couplé par l'intermédiaire d'un bus de rotor (156) à un convertisseur de puissance (162) ayant un seuil de tension associé au niveau du bus de rotor (156) ;
un deuxième système de turbine éolienne (100) ayant un deuxième générateur à induction à double alimentation (120), le deuxième générateur à induction à double alimentation (120) ayant un rotor et un stator ; et
un système de commande (176), le système de commande (176) configuré pour détecter une vitesse de vent réduite au niveau du premier générateur à induction à double alimentation ;
dans lequel en réponse à la détection de la vitesse de vent réduite au niveau du premier générateur à induction à double alimentation, le système de commande est configuré pour commander le premier générateur à induction à double alimentation (120) pour réduire une sortie de puissance réactive du premier générateur à induction à double alimentation (120) et pour réduire la vitesse de rotation du rotor du premier générateur à induction à double alimentation (120) d'une première vitesse de rotation à une deuxième vitesse de rotation pour augmenter la sortie de puissance du premier générateur à induction à double alimentation de sorte qu'une tension de rotor ne dépasse pas le seuil de tension,
dans lequel, à la vitesse de vent réduite, le système de commande (176) est configuré pour réduire la vitesse de rotation du rotor du premier générateur à induction à double alimentation (120) de la première vitesse de rotation à la deuxième vitesse de rotation qui est déterminée sur la base au moins en partie d'un rapport de vitesse d'extrémité associé au premier système de turbine éolienne (100), le rapport de vitesse d'extrémité étant le rapport entre la vitesse tangentielle de l'extrémité d'une pale du premier système de turbine éolienne (100), et la vitesse de vent, et
dans lequel le système de commande (176) est en outre configuré pour commander le deuxième générateur à induction à double alimentation (120) pour augmenter une sortie de puissance réactive du deuxième générateur à induction à double alimentation (120).
